# FASCICULE DE BREVET EUROPEEN

(11) **EP 1 728 697 B1**
(45) Date de publication et mention de la délivrance du brevet: **10.09.2008**
(21) Numéro de dépôt: 06300525.0
(22) Date de dépôt: 29.05.2006
(51) Int. Cl.: B60S 1/48

(54) **Agencement de véhicule automobile pour le maintien d'un tuyau d'alimentation en liquide de lave-vitre**
Anordnung eines Kraftfahrzeugs für die Halterung eines Zuführrohres für Waschflüssigkeit einer Windschutzscheibe
Arrangement of a motor vehicle for retaining a window-cleaning-liquid supply pipe

(30) Priorité: 31.05.2005 FR 0551433
(43) Date de publication de la demande: 06.12.2006
(73) Titulaire: Renault SAS, 92100 Boulogne Billancourt (FR)
(72) Inventeur: Brulet, Jean-Michel, 92130 Issy Les Moulineaux (FR); Deysson, Guillaume, 78180, Montigny le Bretonneux (FR); Vigneau, Cédric, 78390, Bois d'Arcy (FR)

(56) Documents cités:
- EP-A- 1 288 090
- WO-A-03/086826
- FR-A- 1 517 020
- FR-A- 2 674 203
- US-A- 3 574 883

## Description

L'invention concerne un agencement pour le maintien d'un tuyau d'alimentation en liquide de lave-vitre.

L'invention concerne plus particulièrement un agencement pour le maintien, sous un capot de véhicule automobile, d'un tuyau d'alimentation, en liquide de lavage, d'une buse localisée au voisinage d'un pare-brise.

D'une manière générale, le pare-brise est nettoyé par du liquide de lavage provenant de buses situées sous le pare-brise et alimentées par un tuyau d'alimentation provenant d'un récipient localisé sous le capot. Cependant, compte tenu que le tuyau circule librement entre le récipient et le capot, cet agencement présente des inconvénients. En particulier, le tuyau risque d'être coincé lors de manoeuvres d'ouverture et de fermeture du capot, ce qui risque de détériorer l'alimentation des buses en liquide voire même d'abîmer le tuyau. De plus, lorsque le capot est ouvert, la présence inesthétique du tuyau risque d'être négative en termes de qualité perçue vis-à-vis du client.

Le document EP-A-1 288 090 décrit un dispositif de lavage de phares dans lequel une buse de lavage est reliée par un tuyau à un système d'alimentation en liquide de lavage.

Afin de pallier ces inconvénients, l'invention a pour objet un agencement pour le maintien d'un tuyau d'alimentation en liquide lave-vitre simple et peu encombrant ainsi qu'économique et esthétique.

A cet effet, l'invention propose un agencement pour le maintien d'un tuyau d'alimentation en liquide lave-vitre du type cité ci-dessus, caractérisé en ce qu'une face interne d'une charnière du capot comporte un moyen de retenue du tuyau d'alimentation. Selon d'autres caractéristiques de l'invention:
- Le moyen de retenue du tuyau comprend une goulotte apte à recevoir au moins une partie du tuyau d'alimentation.
- La charnière présente la forme d'un U dont l'ouverture est complémentaire de la forme de la goulotte.
- Au moins un ergot est disposé sur chaque paroi latérale de la goulotte de manière à retenir le tuyau.
- La goulotte est rattachée à la charnière de capot par l'intermédiaire d'un collier destiné à enserrer la charnière.
- Le collier est porté par la goulotte.
- Le collier comporte une première et une deuxième portions fixes qui s'étendent depuis un bord libre des parois latérales de la goulotte et une troisième portion, montée mobile autour d'un axe porté par la première portion fixe, entre une position ouverte dans laquelle le collier est ouvert de manière à pouvoir introduire la charnière entre la goulotte et le collier et une position fermée dans laquelle une extrémité libre de la portion mobile coopère par encliquetage avec la deuxième portion fixe de manière à enserrer la charnière.
- Lorsque le collier est en position fermée, la goulotte et le collier présentent une forme de U complémentaire de la forme de la charnière.
- Le collier présente une zone de jonction amincie entre la portion mobile et la première portion fixe de manière à former une articulation.
- Le collier présente plusieurs positions de fermeture de manière à adapter le serrage du collier autour de la charnière de capot.
- La goulotte et le collier sont moulés en une pièce.
- La goulotte est rattachée à la charnière par l'intermédiaire d'un moyen de clippage apte à coopérer avec un orifice ménagé dans la charnière.

D'autres caractéristiques et avantages de l'invention apparaîtront à la lecture de la description d'exemples de réalisation d'un agencement pour le maintien d'un tuyau d'alimentation en liquide lave-vitre en référence aux dessins annexés dans lesquels :
- La figure 1 est une vue générale en perspective de l'agencement selon l'invention.
- La figure 2 est une vue en coupe selon la direction II-II de l'agencement dans une première position.
- La figure 3 est une vue en coupe selon la direction II-II de l'agencement dans une deuxième position.

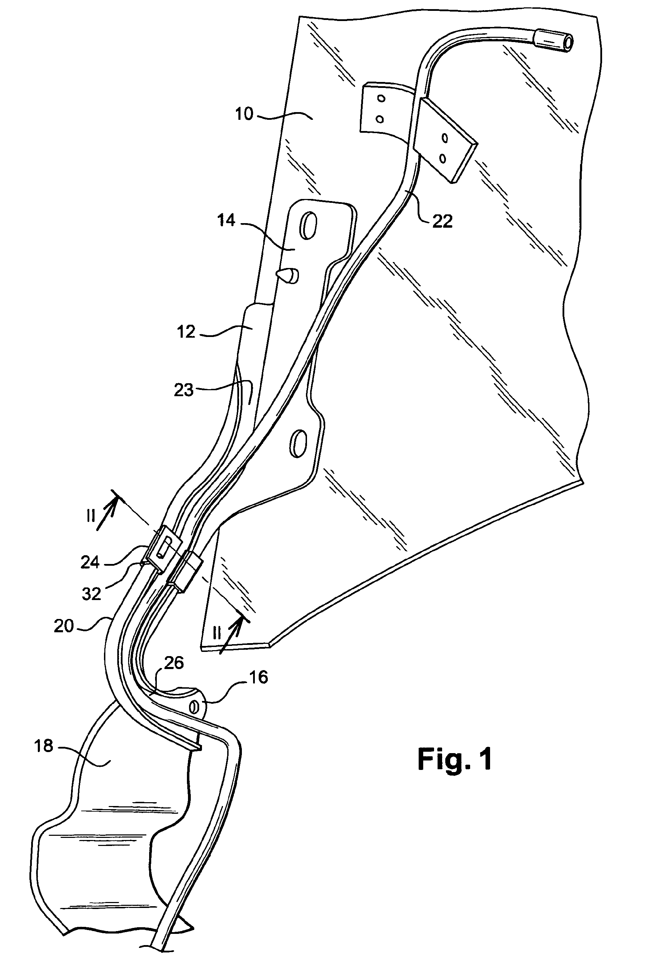

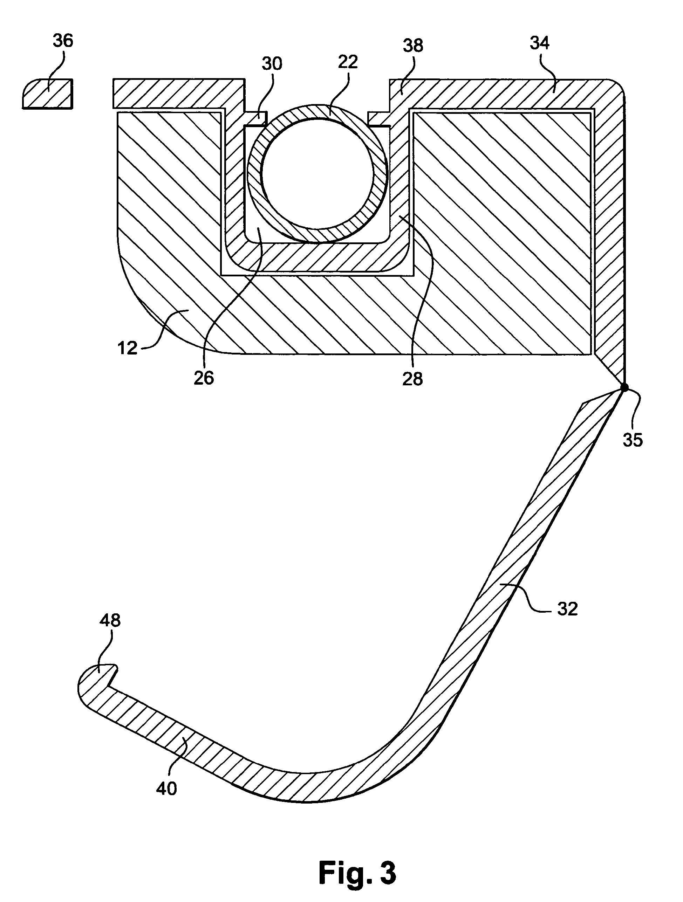

Dans la description qui suit, nous prendrons à titre non limitatif une orientation longitudinale, verticale et transversale indiquée par le trièdre L,V,T des figures 1 à 3.

Des éléments identiques ou analogues sont désignés par les mêmes chiffres de référence.

Tel que représenté à la figure 1, un capot 10, ici en position ouverte, est articulé par rapport à la caisse (non représentée) d'un véhicule par l'intermédiaire de charnières 12 (une seule étant représentée sur les figures). Une première extrémité 14 de la charnière 12 est rattachée au capot 10 et une deuxième extrémité 16 est fixée sur un élément 18 de la caisse du véhicule. La charnière 12 comprend une partie coudée 20 et peut ainsi être, par exemple, du type « col de cygne ». La partie coudée 20 présente un profil en forme de U dont l'ouverture est dirigée vers l'intérieur du véhicule.

Un tuyau 22 d'alimentation en liquide de lavage d'un pare-brise s'étend entre un récipient (non représenté) se trouvant sous le capot 10 à l'intérieur du compartiment moteur et au moins une buse de lavage (non représentée) située au voisinage d'une zone basse du pare-brise.

Le tuyau 22 d'alimentation est fixé sur une face interne 23 de la charnière 12 à l'aide d'un moyen de retenue 24.

Le moyen de retenue 24 comporte une goulotte 26 destinée à recevoir le tuyau 22 d'alimentation. Au moins une paire d'ergots 30 portés par des parois latérales 28 de la goulotte 26 permettent de retenir le tuyau 22 d'alimentation à l'intérieur de la goulotte 26. Les ergots 30 peuvent être régulièrement répartis le long de la goulotte 26 de manière à obtenir une tenue uniforme du tuyau 22 d'alimentation à l'intérieur de la goulotte 26.

Selon un premier mode de réalisation, le moyen de retenue 24 est rattaché à la charnière 12 au moyen d'un collier 32 qui enserre ladite charnière 12.

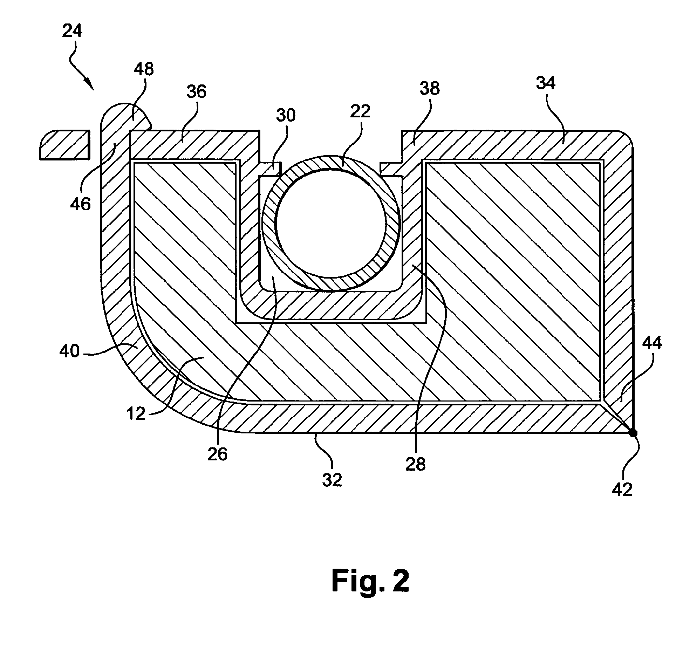

Tel que représenté à la figure 2, le collier 32 est porté par la goulotte 26. Ainsi, dans le cas où la goulotte 26 est en plastique, le collier 32 et la goulotte 26 peuvent être moulés d'une pièce.

Le collier 32 comporte une première portion 34 et une deuxième portion 36 fixes qui s'étendent de part et d'autre de la goulotte 26, depuis un bord 38 de chaque paroi latérale 28. Le collier 32 comporte également une portion mobile 40, montée pivotante autour d'un axe 42 porté par une extrémité libre 44 de la première portion fixe 34 du collier 32, entre une position ouverte dans laquelle la charnière 12 de capot 10 peut être insérée entre le collier 32 et la goulotte 26 et une position fermée dans laquelle une extrémité libre 46 de la portion mobile 40 coopère avec la deuxième portion fixe 36 de façon que le collier 32 enserre la charnière 12, la goulotte 26 se trouvant alors à l'intérieur de l'ouverture formée par le U de la charnière 12.

L'ouverture formée par le U de la charnière 12 peut être complémentaire de la forme de la goulotte 26 de manière à pouvoir recevoir ladite goulotte 26.

Dans l'exemple décrit ici, un amincissement 35 entre la portion mobile 40 et la première portion fixe 34 permet de former une articulation entre ladite portion mobile 40 et ladite première portion fixe 34.

Ainsi, lorsque la portion mobile 40 est en position fermée, le collier 32 et la goulotte 26 présentent une forme générale de U complémentaire de la forme de la charnière 12.

L'extrémité libre 46 de la portion mobile 40 coopère de manière amovible avec la deuxième portion fixe 36 par l'intermédiaire de moyens d'encliquetage 48. Selon une variante, non représentée, les moyens d'encliquetage sont prévus pour adapter le serrage du collier 32 autour de la charnière 12. Ainsi, il est possible d'utiliser un type de moyen de retenue 24 commun pour des modèles de véhicules différents comportant des charnières de capot différentes, ce qui permet des réductions de coûts et une simplification de la logistique.

Ainsi, lorsqu'un opérateur procède au montage, il attache le moyen de retenue 24 à la charnière 12 au moyen du collier 32 puis il clippe le tuyau d'alimentation 22 à l'intérieur de la goulotte 26.

II peut également être prévu d'effectuer les opérations en sens inverse, c'est-à-dire de clipper d'abord le tuyau 22 à l'intérieur de la goulotte 26 puis de monter le moyen de retenue 24 sur la charnière 12.

Pour des raisons de logistique et pour faciliter le montage, l'ensemble tuyau 22 et récipient de liquide de lavage peut aussi être déjà fourni sur la chaîne pourvu du moyen de retenue 24.

Selon un deuxième mode de réalisation, non représenté, la goulotte 26 est rattachée à la charnière 12 par l'intermédiaire d'un moyen de clippage apte à coopérer avec un orifice ménagé dans la charnière 12.

## Revendications

1. Agencement, à l'intérieur d'un véhicule automobile comportant un pare-brise et un capot (10) articulé au moyen d'une charnière (12), un tuyau (22) d'alimentation en liquide de lavage d'une buse localisée au voisinage dudit pare-brise, ledit tuyau se trouvant sous ledit capot (10), **caractérisé en ce que** l'agencement comporte un moyen de retenue (24) du tuyau d'alimentation (22) porté par une face interne (23) de la charnière (12) du capot (10).

2. Agencement d'un tuyau (22) d'alimentation en liquide de lavage selon la revendication 1, **caractérisé en ce que** le moyen de retenue (24) du tuyau (22) comprend une goulotte (26) apte à recevoir au moins une partie du tuyau d'alimentation (22).

3. Agencement d'un tuyau (22) d'alimentation en liquide de lavage selon la revendication précédente, **caractérisé en ce que** la charnière (12) présente la forme d'un U dont l'ouverture est complémentaire de la forme de la goulotte (26).

4. Agencement d'un tuyau (22) d'alimentation en liquide de lavage selon la revendication précédente, **caractérisé en ce qu'**au moins un ergot (30) est disposé sur chaque paroi latérale (28) de la goulotte (26) de manière à retenir le tuyau (22).

5. Agencement d'un tuyau (22) d'alimentation en liquide de lavage selon l'une quelconque des revendications 2 à 4, **caractérisé en ce que** la goulotte (26) est rattachée à la charnière (12) de capot (10) par l'intermédiaire d'un collier (32) destiné à enserrer la charnière (12).

6. Agencement d'un tuyau (22) d'alimentation en liquide de lavage selon la revendication précédente, **caractérisé en ce que** le collier (32) est porté par la goulotte (26).

7. Agencement d'un tuyau (22) d'alimentation en liquide de lavage selon la revendication précédente, **caractérisé en ce que** le collier (32) comporte une première (34) et une deuxième (36) portions fixes qui s'étendent depuis un bord libre (38) des parois latérales (28) de la goulotte (26) et une troisième portion (40), montée mobile autour d'un axe (42) porté par la première portion fixe (34), entre une position ouverte dans laquelle le collier (32) est ouvert de manière à pouvoir introduire la charnière (12) entre la goulotte (26) et le collier (32) et une position fermée dans laquelle une extrémité libre (46) de la portion mobile (40) coopère par encliquetage avec la deuxième portion fixe (36) de manière à enserrer la charnière (12).

8. Agencement d'un tuyau (22) d'alimentation en liquide de lavage selon la revendication précédente, **caractérisé en ce que**, lorsque le collier (32) est en position fermée, la goulotte (26) et le collier (32) présentent une forme de U complémentaire de la forme de la charnière (12).

9. Agencement d'un tuyau (22) d'alimentation en liquide de lavage selon l'une quelconque des revendications 7 ou 8, **caractérisé en ce que** le collier (32) présente une zone de jonction (35) amincie entre la portion mobile (40) et la première portion fixe (34) de manière à former une articulation.

10. Agencement d'un tuyau (22) d'alimentation en liquide de lavage selon l'une quelconque des revendications 5 à 9, **caractérisé en ce que** le collier (32) présente plusieurs positions de fermeture de manière à adapter le serrage du collier (32) autour de la charnière (12) de capot (10).

11. Agencement d'un tuyau (22) d'alimentation en liquide de lavage selon l'une quelconque des revendications 5 à 10, **caractérisé en ce que** la goulotte (26) et le collier (32) sont moulés en une pièce.

12. Agencement d'un tuyau (22) d'alimentation en liquide de lavage selon l'une quelconque des revendications 2 à 4, **caractérisé en ce que** la goulotte (26) est rattachée à la charnière (12) par l'intermédiaire d'un moyen de clippage apte à coopérer avec un orifice ménagé dans la charnière (12).

## Claims

1. Arrangement, inside a motor vehicle comprising a windscreen and a bonnet (10) articulated by means of a hinge (12), of a pipe (22) for supplying washing fluid to a nozzle situated close to said windscreen, said pipe being located under said bonnet (10), **characterized in that** the arrangement comprises a means (24) for retaining the supply pipe (22) held by an inner face (23) of the hinge (12) of the bonnet (10).

2. Arrangement of a pipe (22) for supplying washing fluid according to Claim 1, **characterized in that** the means (24) for retaining the pipe (22) comprises a channel (26) able to receive at least part of the supply pipe (22).

3. Arrangement of a pipe (22) for supplying washing fluid according to the preceding claim, **characterized in that** the hinge (12) is U-shaped, the opening of which is complementary to the shape of the channel (26).

4. Arrangement of a pipe (22) for supplying washing fluid according to the preceding claim, **characterized in that** at least one projection (30) is arranged on each side wall (28) of the channel (26) so as to retain the pipe (22).

5. Arrangement of a pipe (22) for supplying washing fluid according to any one of Claims 2 to 4, **characterized in that** the channel (26) is fastened to the hinge (12) of the bonnet (10) by way of a collar (32) intended to grip the hinge (12).

6. Arrangement of a pipe (22) for supplying washing fluid according to the preceding claim, **characterized in that** the collar (32) is held by the channel (26).

7. Arrangement of a pipe (22) for supplying washing fluid according to the preceding claim, **characterized in that** the collar (32) comprises a first fixed portion (34) and a second fixed portion (36) which extend from a free edge (38) of the side walls (28) of the channel (26) and a third portion (40) fitted such that it can move about a pin (42) held by the first fixed portion (34) between an open position, in which the collar (32) is open so that the hinge (12) can be inserted between the channel (26) and the collar (32), and a closed position, in which a free end (46) of the moving portion (40) engages by snap-fastening with the second fixed portion (36) so as to grip the hinge (12).

8. Arrangement of a pipe (22) for supplying washing fluid according to the preceding claim, **characterized in that**, when the collar (32) is in the closed position, the channel (26) and the collar (32) make a U shape complementary to the shape of the hinge (12).

9. Arrangement of a pipe (22) for supplying washing fluid according to either one of Claims 7 and 8, **characterized in that** the collar (32) has a thinned jointed area (35) between the moving portion (40) and the first fixed portion (34) so as to form an articulation.

10. Arrangement of a pipe (22) for supplying washing fluid according to any one of Claims 5 to 9, **characterized in that** the collar (32) has a plurality of closure positions so as to modify the clamping of the collar (32) around the hinge (12) of the bonnet (10).

11. Arrangement of a pipe (22) for supplying washing fluid according to any one of Claims 5 to 10, **characterized in that** the channel (26) and the collar (32) are moulded in one piece.

12. Arrangement of a pipe (22) for supplying washing fluid according to any one of Claims 2 to 4, **characterized in that** the channel (26) is fastened to the hinge (12) by way of a clip-fastening means that can engage with an orifice formed in the hinge (12).

## Patentansprüche

1. Anordnung, im Inneren eines Kraftfahrzeugs, das eine Windschutzscheibe und eine mittels eines Scharniers (12) angelenkte Abdeckhaube (10) aufweist, einer Leitung (22) zur Versorgung einer in der Nähe der Windschutzscheibe befindlichen Düse mit Waschflüssigkeit, wobei die Leitung sich unter der Abdeckhaube (10) befindet, **dadurch gekennzeichnet, dass** die Anordnung eine Einrichtung (24) für den Halt der Versorgungsleitung (22) aufweist, die von einer Innenseite (23) des Scharniers (12) der Abdeckhaube (10) getragen wird.

2. Anordnung einer Leitung (22) zur Versorgung mit Waschflüssigkeit nach Anspruch 1, **dadurch gekennzeichnet, dass** die Einrichtung (24) zum Halt der Leitung (22) eine Rinne (26) aufweist, die fähig ist, mindestens einen Teil der Versorgungsleitung (22) aufzunehmen.

3. Anordnung einer Leitung (22) zur Versorgung mit Waschflüssigkeit nach dem vorhergehenden Anspruch, **dadurch gekennzeichnet, dass** das Scharnier (12) die Form eines U aufweist, dessen Öffnung komplementär zur Form der Rinne (26) ist.

4. Anordnung einer Leitung (22) zur Versorgung mit Waschflüssigkeit nach dem vorhergehenden Anspruch, **dadurch gekennzeichnet, dass** mindestens ein Zapfen (30) auf jeder Seitenwand (28) der Rinne (26) angeordnet ist, um die Leitung (22) zurückzuhalten.

5. Anordnung einer Leitung (22) zur Versorgung mit Waschflüssigkeit nach einem der Ansprüche 2 bis 4, **dadurch gekennzeichnet, dass** die Rinne (26) an dem Scharnier (12) der Abdeckhaube (10) über eine Befestigungsschelle (32) befestigt ist, die dazu bestimmt ist, das Scharnier (12) zu umklammern.

6. Anordnung einer Leitung (22) zur Versorgung mit Waschflüssigkeit nach dem vorhergehenden Anspruch, **dadurch gekennzeichnet, dass** die Befestigungsschelle (32) von der Rinne (26) getragen wird.

7. Anordnung einer Leitung (22) zur Versorgung mit Waschflüssigkeit nach dem vorhergehenden Anspruch, **dadurch gekennzeichnet, dass** die Befestigungsschelle (32) einen ersten (34) und einen zweiten (36) festen Abschnitt, die sich von einem freien Rand (38) der Seitenwände (28) der Rinne (26) aus erstrecken, und einen dritten Abschnitt (40) aufweist, der um eine Achse (42), die vom ersten festen Abschnitt (34) getragen wird, zwischen einer offenen Stellung, in der die Befestigungsschelle (32) offen ist, um das Scharnier (12) zwischen die Rinne (26) und die Befestigungsschelle (32) einfügen zu können, und einer geschlossenen Stellung beweglich montiert ist, in der ein freies Ende (46) des beweglichen Abschnitts (40) durch Einrasten mit dem zweiten festen Abschnitt (36) zusammenwirkt, um das Scharnier (12) zu umklammern.

8. Anordnung einer Leitung (22) zur Versorgung mit Waschflüssigkeit nach dem vorhergehenden Anspruch,
**dadurch gekennzeichnet, dass**, wenn die Befestigungsschelle (32) in der geschlossenen Stellung ist, die Rinne (26) und die Befestigungsschelle (32) eine U-Form aufweisen, die komplementär zur Form des Scharniers (12) ist.

9. Anordnung einer Leitung (22) zur Versorgung mit Waschflüssigkeit nach einem der Ansprüche 7 oder 8, **dadurch gekennzeichnet, dass** die Befestigungsschelle (32) eine verdünnte Verbindungszone (35) zwischen dem beweglichen Abschnitt (40) und dem ersten festen Abschnitt (34) aufweist, um ein Gelenk zu bilden.

10. Anordnung einer Leitung (22) zur Versorgung mit Waschflüssigkeit nach einem der Ansprüche 5 bis 9, **dadurch gekennzeichnet, dass** die Befestigungsschelle (32) mehrere Schließstellungen aufweist, um das Klammern der Befestigungsschelle (32) um das Scharnier (12) der Abdeckhaube (10) anzupassen.

11. Anordnung einer Leitung (22) zur Versorgung mit Waschflüssigkeit nach einem der Ansprüche 5 bis 10, **dadurch gekennzeichnet, dass** die Rinne (26) und die Befestigungsschelle (32) aus einem Stück geformt sind.

12. Anordnung einer Leitung (22) zur Versorgung mit Waschflüssigkeit nach einem der Ansprüche 2 bis 4, **dadurch gekennzeichnet, dass** die Rinne (26) am Scharnier (12) mittels einer Clipeinrichtung befestigt ist, die fähig ist, mit einer im Scharnier (12) ausgearbeiteten Öffnung zusammenzuwirken.
